# DEMANDE DE BREVET EUROPEEN

(11) **EP 0 773 455 A1**
(43) Date de publication de la demande: **14.05.1997**
(21) Numéro de dépôt: 96402385.7
(22) Date de dépôt: 08.11.1996
(51) Int. Cl.: G01V 15/00

(54) **Articles de protection polymériques détectables, leur procédé de préparation et leurs applications**

(30) Priorité: 09.11.1995 FR 9513266
(71) Demandeur: HUTCHINSON, F-75008 Paris (FR)
(72) Inventeur: De Ricci, Sophie, 92700 Colombes (FR); Phalip, Patricia, 45120 Chalette sur Loing (FR)
(74) Mandataire: Orès, Bernard

(57) **Abrégé**

Article de protection polymérique habituellement utilisé dans les chaînes de fabrication, de transformation ou de conditionnement, notamment dans le domaine agro-alimentaire, pharmaceutique ou alimentaire, lequel article contient, réparti de manière homogène dans son ensemble, un matériau ayant des propriétés conductrices et/ou magnétiques, détectable par un détecteur de particules métalliques.

Procédé de préparation dudit article.

## Description

La présente invention est relative à la détection de corps étrangers polymériques de très petite taille (par exemple 5x5 mm), dans une chaîne de fabrication, de transformation ou de conditionnement, notamment dans le domaine agro-alimentaire, pharmaceutique ou alimentaire. On entend par corps étrangers, par exemple des articles de protection utilisés dans lesdites chaînes de fabrication ou de conditionnement, tels que des gants. De tels corps étrangers doivent être détectés aisément ; en effet, notamment dans le cadre de la fabrication d'aliments préparés, les opérateurs ont en général l'obligation de porter des gants étanches pour des raisons d'hygiène. Toute contamination des aliments par un morceau de gant doit être évitée et contrôlée. Or, il arrive parfois que les gants portés par les opérateurs se déchirent et que des morceaux de gant tombent dans les aliments en préparation.

En conséquence, la présente invention s'est donné pour but de modifier les articles de protection polymériques, habituellement utilisés dans les chaînes de fabrication ou de conditionnement, de manière à rendre détectables des fragments de ceux-ci, même s'ils ont des dimensions de l'ordre du mm.

Actuellement, ce problème est résolu par l'utilisation d'articles, et notamment de gants, d'une couleur différente des objets traités dans les chaînes de fabrication, de transformation ou de conditionnement. Dans le cas des aliments, par exemple, l'utilisation de gants blancs ou de couleur naturelle (chair), qui se confondent trop facilement avec les aliments, doit être proscrite. Toutefois, la réglementation sur l'hygiène des installations requiert, pour les opérateurs, l'utilisation d'une tenue vestimentaire de couleur claire, parfois exclusivement de couleur blanche. De plus, la détection visuelle n'est pas entièrement fiable.

Bien que pour la détection d'une déchirure de gants, dans le domaine médical (Demande internationale WO 94/02080 au nom d'Isis Innovation Limited), il ait été proposé d'utiliser un colorant dont la couleur est modifiée lors de la perforation, une telle solution n'est pas adaptée aux problèmes qui se posent dans le cadre des industries précitées.

D'autres techniques de détection, telle que l'incorporation d'une feuille d'aluminium, dans les pansements, par exemple, n'est également pas adaptée à des éléments non-plans, ou à des éléments présentant un caractère élastique, tels que des gants.

Dans le cas d'articles de protection polymériques (élastomères ou plastiques) tels que des gants de protection, il est en effet nécessaire :
- que la forme entière de l'article de protection (gant par exemple) contienne le matériau détectable, la coupure accidentelle de l'article polymérique pouvant intervenir à n'importe quel endroit,
- que la méthode de détection soit suffisamment sensible pour détecter de petits fragments (5x5 mm) et
- qu'il n'y ait pas d'altération des propriétés mécaniques de l'article de protection polymérique (élasticité du gant, par exemple).

En conséquence, la Demanderesse s'est donné pour but de pourvoir à des articles de protection polymériques qui répondent mieux aux besoins de la pratique, que les articles de protection de l'Art antérieur, notamment en ce qu'il est effectivement possible de détecter de manière sensible et fiable, un petit fragment dudit article, présent, par mégarde, dans une chaîne de fabrication, de transformation ou de conditionnement du domaine agro-alimentaire, alimentaire ou pharmaceutique.

L'invention a pour objet des articles de protection polymériques, tels que des gants de protection en élastomère ou en plastique, lesquels articles sont caractérisés en ce qu'ils contiennent, réparti de manière homogène dans l'ensemble desdits articles, un matériau ayant des propriétés conductrices et/ou magnétiques, détectable par un détecteur de particules métalliques, lequel matériau se présente sous la forme d'au moins une couche homogène, à base d'une poudre sélectionnée dans le groupe constitué par les poudres métalliques et les poudres d'oxydes métalliques sélectionnées parmi les ferrites ayant une pente maximale du cycle d'hystérésis forte et un champ coercitif faible.

De manière avantageuse, lesdites poudres métalliques sont de préférence sélectionnées parmi les poudres métalliques peu oxydables, telles que les poudres métalliques de métaux nobles.

Par exemple, pour un détecteur de particules métalliques Safeline® modèle S35, on entend, au sens de la présente invention, par une pente maximale du cycle d'hystérisis forte, une pente supérieure à 10⁻²m³kg⁻¹, de préférence supérieure à 5.10⁻²m³kg⁻¹ et l'on entend par champ coercitif faible, un champ coercitif inférieur à 10⁵ A.m⁻¹, de préférence de l'ordre de 10³ A.m⁻¹.

Conformément à l'invention, ladite poudre présente une granulométrie comprise entre 0,1 et 200 µm, de préférence entre 0,1 et 30 µm.

Ladite couche homogène est, de préférence, prise en sandwich entre deux couches de polymères ne contenant pas de matériau détectable.

En variante, ledit matériau détectable se présente sous la forme de fibres métalliques (maillées, tissées et/ou tressées).

De manière surprenante, les articles de protection conformes à l'invention contiennent le matériau détectable dans l'ensemble de l'article, peuvent être détecter au moyen de systèmes de détection de particules métalliques existants, ne présentent pas de modifications dans leurs propriétés mécaniques et sont stables (stabilité de la dispersion du matériau détectable dans l'ensemble de l'article polymérique).

La présente invention a également pour objet un procédé de préparation d'un article de protection polymérique conforme à l'invention, caractérisé en ce qu'il comprend :
(1) l'incorporation du matériau ayant des propriétés conductrices et/ou magnétiques, détectable par un détecteur de particules métalliques, dans un matériau polymérique,
(2) la dissolution du mélange obtenu en (1) dans un solvant approprié et
(3) la mise en forme de l'article suivant les méthodes propres aux industries du caoutchouc et des plastiques, telles que injection, extrusion, calandrage, enduction, trempé.

Conformément à l'invention, dans le cas où ledit matériau ayant des propriétés conductrices et/ou magnétiques est sous la forme d'une poudre :
- l'étape (1) comprend soit l'incorporation directe de ladite poudre au polymère, lorsque ce dernier est sous forme solide, soit lorsque ledit polymère est sous forme liquide, la prédispersion de la poudre dans une solution aqueuse, contenant de préférence un agent dispersant, suivie de l'addition du polymère sous forme liquide à ladite prédispersion.

Selon un autre mode de mise en oeuvre du procédé selon l'invention, l'étape (3) de mise en forme de l'article est réalisée par trempés successifs dans des solutions telles qu'obtenues à l'étape (2) et dans des solutions ne contenant pas de matériau ayant des propriétés conductrices et/ou magnétiques.

Une telle méthode permet d'obtenir, par exemple des gants dans lesquels ledit matériau détectable est réparti de manière homogène.

Outre les dispositions qui précèdent, l'invention comprend encore d'autres dispositions, qui ressortiront de la description qui va suivre, qui se réfère à des exemples de mise en oeuvre de la présente invention, ainsi qu'aux dessins annexés, dans lesquels :
- la figure 1 représente un détecteur de particules métalliques (figure 1A : représentation schématique d'une tête de détection composée de trois boucles équidistantes (1, 2, 2') ; la figure 1B : schéma de fonctionnement) ;
- la figure 2 est une représentation de la répartition d'une poudre d'oxyde métallique dans un gant selon l'exemple 1 et la surface détectée en fonction de l'épaisseur de la couche contenant le matériau détectable ;
- la figure 3 représente une vue en coupe d'un article multicouches selon l'invention ;
- la figure 4 illustre les propriétés magnétiques d'une ferrite d'yttrium [Y200, courbe (1)] et d'une ferrite de strontium [HM1700, courbe (2)].

Il doit être bien entendu, toutefois, que ces exemples sont donnés uniquement à titre d'illustration de l'objet de l'invention, dont ils ne constituent en aucune manière une limitation.

### EXEMPLE 1 : Préparation d'un gant en élastomère détectable conforme à l'invention, comprenant en tant que matériau détectable, une poudre d'oxydes métalliques.

### ^{∗} Formulation latex :

| - couche assurant les propriétés mécaniques : | |
|---|---|
| Bain de latex n° 1 : | |
| Butofan LNW6C (latex nitrile BASF) | 100 g |
| potasse | 0,5 g |
| nonylphénol | 2 g |
| oxyde de zinc | 2 g |
| accélérateur de type carbamate | 0,8 g |
| soufre | 1 g |
| oxyde de titane | 1 g |
| 2-2' méthylène bis 6t. butyl p. cresol | 1 g |

| - Préparation de la dispersion de ferrites pour le bain de latex n° 2 : | |
|---|---|
| Bayferrox 318M® (Bayer) | 100 g |
| Ketjenlube 522® (Akzo Nobel) | 3,35 g |
| Eau déminéralisée | 100 g. |

Le pH est ramené à 8,8 par addition d'ammoniaque, pour ne pas déstabiliser le bain de latex n° 2.

| - Composition de la couche contenant les ferrites : | |
|---|---|
| Bain n° 2 : | |
| dispersion de ferrites (Bayferrox 318M® (Bayer)) | 100 g |
| solution aqueuse de Mowiol 26/88® à 16 % | 10 g |
| latex nitrile (38 %) | 215 g |

| - Composition de la couche interne : | |
|---|---|
| Bain n° 3 : | |
| Butofan (latex nitrile BASF à 38 %) | 100 g |
| potasse | 0,5 g |
| nonylphénol | 2 g |
| oxyde de zinc | 2 g |
| accélérateur de type carbamate | 0,8 g |
| soufre | 1 g |
| 2-2' méthylène bis 6t. butyl crésol | 1 g |
| oxyde de titane | 5 g |
| polyacrylate de sodium | 0,2 g. |

### ∗ Protocole de trempé :

. conditionnement des formes en céramique à 70°C,
. trempé dans un bain de coagulant (solution aqueuse de nitrate de calcium à 35 %),
. séchage du coagulant 5' à 70°C,
. trempé de la forme dans le bain de latex n° 1,
. séchage du latex 5',
. trempé dans le bain de latex n° 2,
. séchage 5',
. trempé dans le bain de latex n° 3,
. pulvérisation du flock (pulvérisation de fibres broyées ou coupées),
. lavage par immersion dans l'eau 1 heure à 40°C,
. séchage 1 heure de 70°C à 90°C,
. vulcanisation 30 min de 100 à 125°C,
. démoulage du gant.

Les opérations de trempé dans le bain de latex n° 2, de séchage et de trempé dans le bain de latex n° 3 peuvent être répétées plusieurs fois, de manière à obtenir des articles contenant plusieurs couches de matériau détectable, prises en sandwich entre des couches de caoutchouc ne contenant pas de matériau détectable.

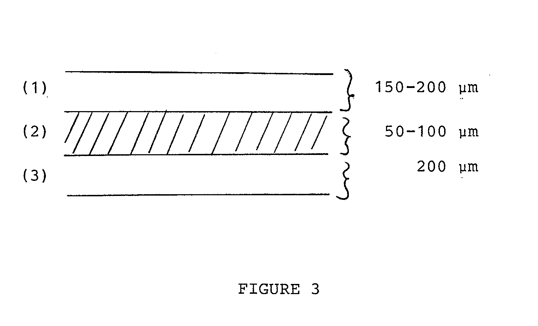

On obtient dans ce cas, un article multicouches tel qu'illustré à la figure 3, dans laquelle la couche (1) (couche externe) est une couche d'élastomère sans ferrite, d'une épaisseur comprise entre 150 et 200 µm, la couche (2) est constituée d'élastomère dans lequel est répartie, de manière homogène, une ferrite, d'une épaisseur comprise entre 50 et 100 µm, et la couche (3) (couche interne) est une couche d'élastomère d'une épaisseur d'environ 200 µm, associée à un flock pour la rendre adhésive (confort, notamment dans le cas des gants).

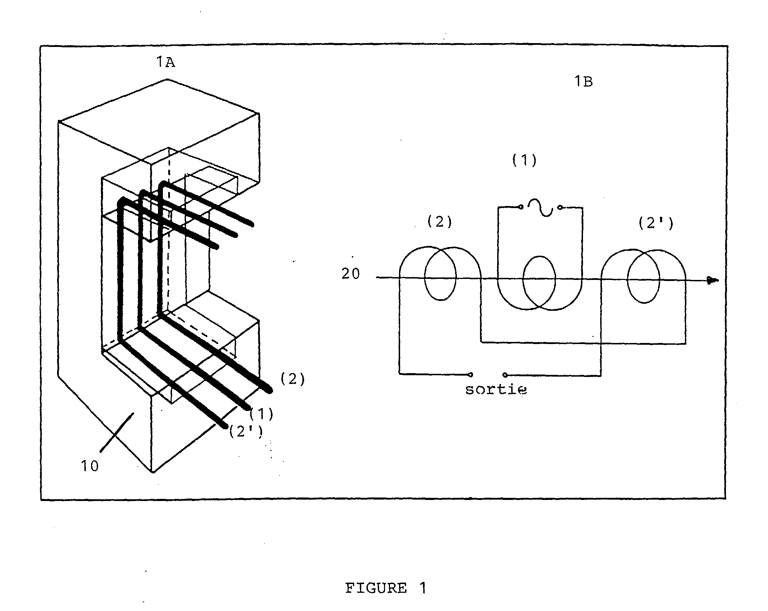

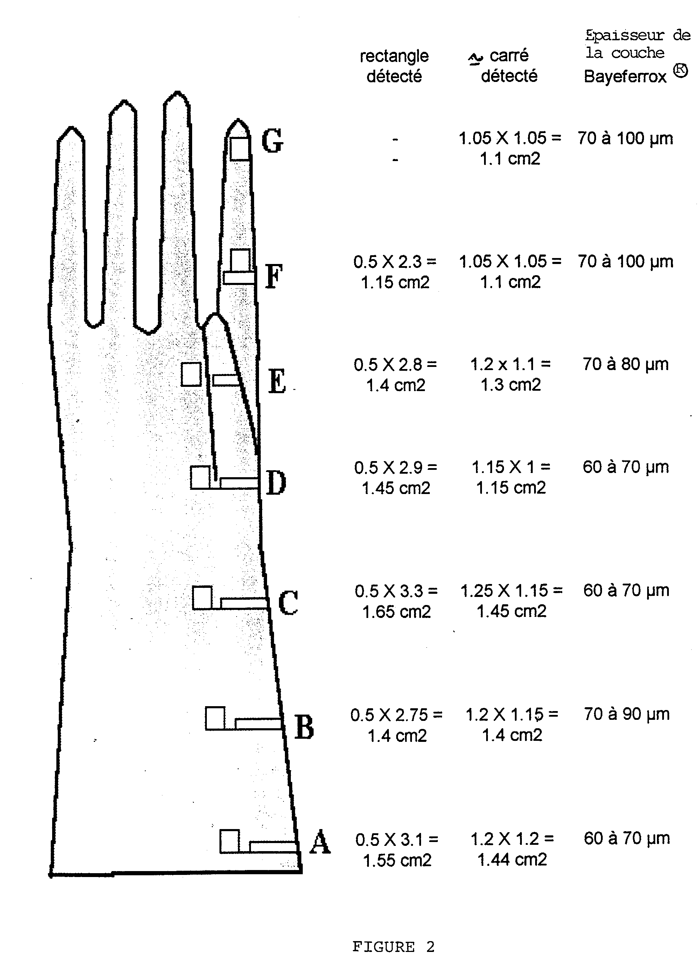

Des études de détection à l'aide d'un détecteur Safeline® S35 (voir figure 1) ont été réalisées sur des morceaux de gants de surfaces différentes. Les résultats sont illustrés à la figure 2 et montrent que la surface détectée est fonction de l'épaisseur de la couche de ferrite.

Par exemple, pour une épaisseur de la couche de ferrite de 150 µm, cet appareil permet de détecter une surface de 1,7 x 0,5 soit 0,85 cm².

### EXEMPLE 2 : exemple de réalisation d'un gant à partir d'une dissolution d'élastomère.

D'autres modes de préparations desdits articles détectables peuvent être envisagés ; en effet, selon les applications et les méthodes mises en oeuvre pour obtenir le produit fini, le caoutchouc peut se présenter outre sous la forme de latex (voir exemple 1) sous deux autres formes différentes :
. caoutchouc sec : c'est la forme la plus courante ; la poudre de matériau détectable, peut dans ce cas de figure, être introduite avec d'autres ingrédients, tels que charges, plastifiants, agents de vulcanisation, dans un mélangeur classique ; l'article est dans ce cas mis en forme par l'une des méthodes suivantes : extrusion, calandrage, injection ;
. dissolution : le caoutchouc est dissous dans un solvant approprié. La poudre de matériau détectable peut être introduite dans un mélangeur pour caoutchouc sec ou dans un mélangeur à dissolution. Ces dissolutions sont mises en oeuvre sur des métiers à gommer (enduction de tissus), déposées au pistolet comme des peintures ou par trempé.

L'exemple de mise en oeuvre à partir d'une dissolution d'élastomère comprend :

### * la préparation d'une composition de la couche assurant les propriétés mécaniques :

| Bain 1 : | |
|---|---|
| Kraton G1652⁽¹⁾ | 15 g |
| cyclohexane | 85 g |
| ⁽¹⁾ élastomère Shell. | |

### * la préparation d'une composition de la couche contenant les ferrites :

| Bain 2 : | |
|---|---|
| Bayferrox 318M® | 53 g |
| Kraton G 56A41⁽²⁾ | 36 g |
| cyclohexane | 190 g |
| ⁽²⁾ formulaztion multibase. | |

### * Couche de finition interne :

| Bain 3 : | |
|---|---|
| Kraton D 1102⁽³⁾ | 10 g |
| cyclohexane | 90 g |
| ⁽³⁾ élastomère Shell. | |

### * Protocole de trempé:

- préchauffage de la forme 3 min à 70°C.
. **Bain N° 1 :**
   1ère couche :
   entrée et sortie lente sans séjour
   répartition par rotation 10 min
   séchage 2 min à 70°C
   2ème couche :
   idem
   répartition par rotation 11 min
   séchage 10 min à 70°C.
. **Bain n° 2 :**
   1ère couche :
   entrée moyenne et sortie lente sans séjour
   répartition pendant 2 minutes
   ventilation pendant 5 minutes.
   2ème couche :
   entrée moyenne et sortie lente sans séjour
   répartition pendant 2 min 40
   ventilation pendant 5 minutes
   3ème couche :
   entrée moyenne et sortie lente sans séjour
   répartition pendant 3 min 20
   ventilation pendant 5 minutes
   4ème couche :
   entrée moyenne et sortie lente sans séjour
   répartition pendant 4 minutes
   ventilation pendant 5 minutes.
. **Bain n°3** (Couche de finition)
   entrée moyenne et sortie lente sans séjour
   répartition pendant 4 minutes
   ventilation pendant 5 minutes.

### EXEMPLE 3 : Détection de corps étrangers dans une chaîne de conditionnement, de transformation ou de fabrication.

De petits fragments (0,85 cm²) d'articles polymériques contenant un matériau détectable, tels que décrits à l'exemple 1, peuvent notamment être détectés à l'aide d'un détecteur de particules métalliques illustré à la figure 1. Un tel détecteur comprend une tête de détection, composée de trois boucles équidistantes (1, 2, 2') insérées dans un support isolant (10). La boucle centrale (1) est reliée à un oscillateur et émet un champ électromagnétique induisant une différence de potentiel dans les deux boucles extérieures. Quand le produit à vérifier passe dans le sens de l'axe commun des trois boucles (20), la moindre présence métallique provoque une légère différence de potentiel. Celle-ci n'est pas annulée par le système de balance automatique, mais amplifiée et convertie en impulsions pour actionner un relais, ou un système d'éjection.

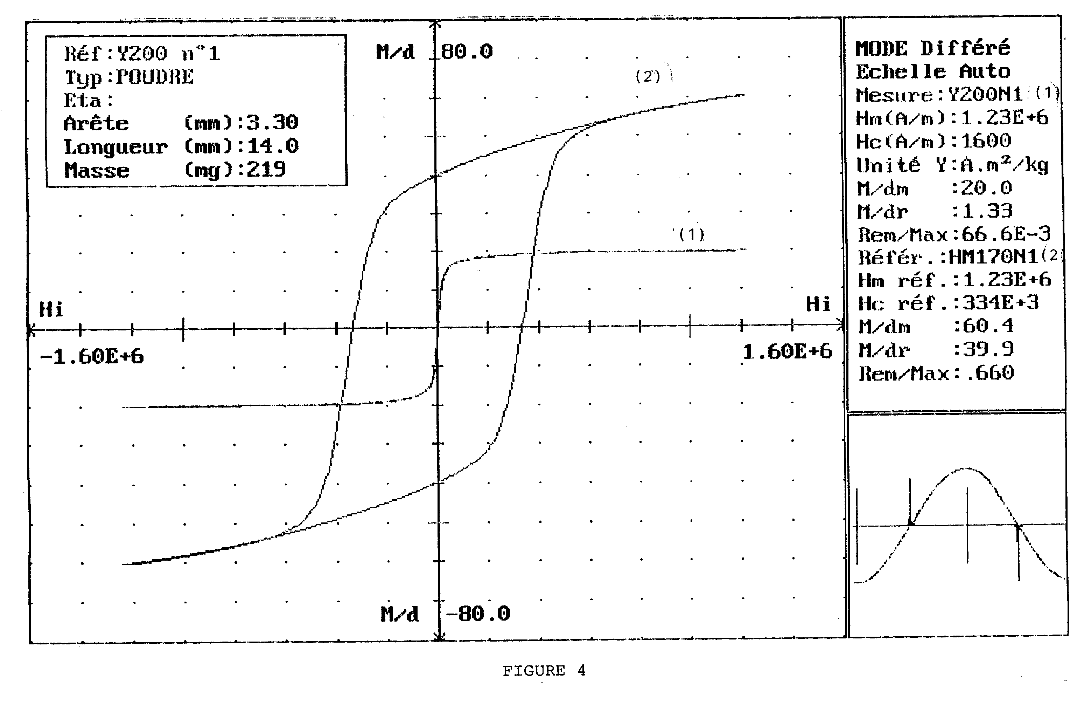

Selon le matériau détectable utilisé, le détecteur de particules métalliques réagit différemment ; dans le cas des ferrites, les Tableaux I et II ci-après et la figure 4 en résument les caractéristiques et les quantités détectables par ce détecteur de particules.

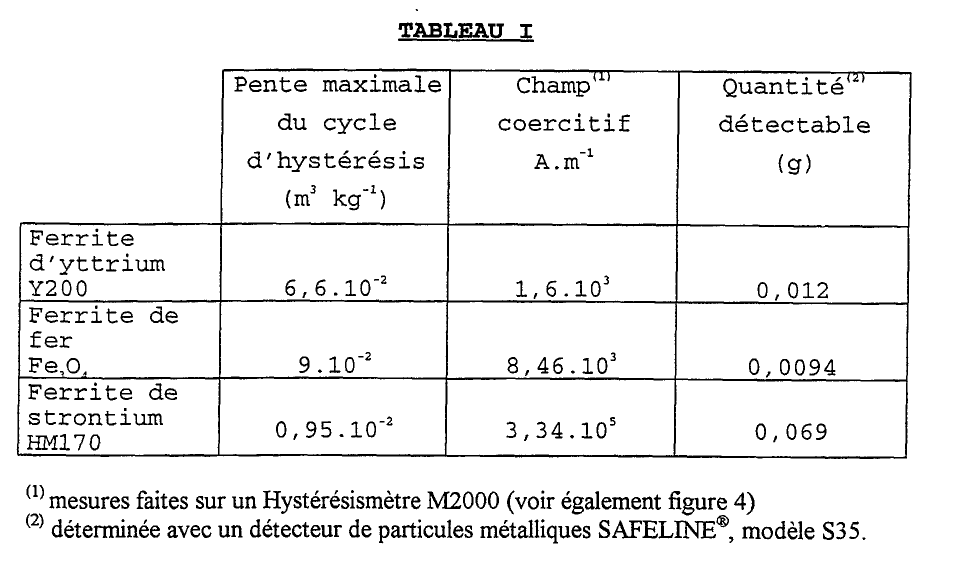

**TABLEAU II :**

| | | | |
|---|---|---|---|
| **quantité de poudre ou de métal détectée par l'appareil Safeline® modèle S35** | | | |

| Poudre | Métal élément métallique | Sensibilité :199 sans déphasage Masse détectée : (g) | Sensibilité :120 Déphasage : 3500 Masse détectée : (g) |
|---|---|---|---|
| Ferrites | | | |
| Ferrite d'yttrium | | | |
| Y200 | Fe, Y | 0,036 | 0,0116 |
| Y212 | Fe, Y, Ca | 0,044 | 0,0092 |
| Y216 | Fe, Y, Ca | 0,046 | 0,0086 |
| Y220 | Fe, Y, Ca | 0,046 | 0,0078 |
| Ferrite de Zn | | | |
| A500 | Fe, Zn | 0,052 | 0,0072 |
| Ferrite de strontium | | | |
| HM 170 | St, Ba | 0,2 | 0,069 |
| Ferrite de fer | | | |
| Fe₃O₄ naturel | Fe | - | 0,015 |
| Bayferrox 318M | Fe, Fe | - | 0,0094 |
| Ferrite de calcium | | | |
| Ferrinox FC 71 (S.N.C.Z.) | Fe, Ca | - | 0,135 |
| Ferrite de cobalt | | | |
| TODA | Fe, Co | - | 0,0231 |
| Oxydes | | | |
| oxyde de fer | | | |
| Fe₂O₃ | Fe | - | 0,044 |
| OXYFERNOIR(Ferro) | Fe | - | 0,0130 |
| Fer Carbonyl | Fe | 0,086 | 0,0132 |
| Métaux | | | |
| Aluminium | | | |
| Feuilles d'alu. | Al | 0,003 | - |
| A.2002 | Al | >5 | >5 |
| Alu. 01GA15v | Al | 0,473 | >0,473 |
| Zinc | Zn | 2,76 | >2,76 |

En particulier :
- le Tableau I illustre l'intérêt de la ferrite d'yttrium, pour la détection de petites quantités de ferrite, avec un détecteur du type SAFELINE®, modèle S35 et montre l'intérêt des ferrites présentant une pente maximale de cycle d'hystérisis forte et un champ coercitif faible ;
- la figure 4 illustre les résultats obtenus au Tableau I (propriétés magnétiques) ; elle comprend en abscisse, le champ induit (Hi) et en ordonnée, l'aimantation (M/d) ; dans cette figure, Hm correspond au champ d'excitation correspondant à la saturation du matériau ; Hc correspond au champ coercitif, M/dm à l'aimantation à saturation et M/dr à l'aimantation rémanente ;
- le Tableau II montre notamment que l'appareil de détection de particules métalliques Safeline® S35 permet de détecter au point le moins sensible de l'appareil de très petites quantités notamment des ferrites (Zn, Fe, Y), ce qui permet la détection de fragments contenant de très petites quantités desdites ferrites.

Ainsi que cela ressort de ce qui précède, l'invention ne se limite nullement à ceux de ses modes de mise en oeuvre, de réalisation et d'application qui viennent d'être décrits de façon plus explicite ; elle en embrasse au contraire toutes les variantes qui peuvent venir à l'esprit du technicien en la matière, sans s'écarter du cadre, ni de la portée de la présente invention.

## Revendications

1. Article de protection polymérique, caractérisé en ce qu'il est constitué d'un polymère sélectionné dans le groupe constitué par les élastomères et 5 les plastiques, en ce qu'il contient, réparti de manière homogène dans l'ensemble dudit article, un matériau ayant des propriétés conductrices et/ou magnétiques, détectable par un détecteur de particules métalliques, lequel matériau se présente sous la forme d'au moins une couche homogène, à base d'une poudre sélectionnée dans le groupe constitué par les poudres métalliques et les poudres d'oxydes métalliques sélectionnées parmi les ferrites ayant une pente maximale du cycle d'hystérésis forte et un champ coercitif faible.

2. Article de protection polymérique selon la revendication 1, caractérisé en ce que lesdites poudres métalliques sont de préférence sélectionnées parmi les poudres métalliques peu oxydables, telles que les poudres métalliques de métaux nobles.

3. Article de protection polymérique selon l'une quelconque des revendications 1 ou 2, caractérisé en ce que ladite poudre présente une granulométrie comprise entre 0,1 et 200 µm, de préférence, entre 0,1 et 30 µm.

4. Article de protection polymérique, caractérisé en ce qu'il est constitué d'un polymère sélectionné dans le groupe constitué par les élastomères et les plastiques, en ce qu'il contient, réparti de manière homogène dans l'ensemble dudit article, un matériau ayant des propriétés conductrices et/ou magnétiques, détectable par un détecteur de particules métalliques, lequel matériau se présente sous la forme de fibres métalliques, maillées, tissées et/ou tressées, lesquelles fibres sont incluses dans au moins une couche de polymère ne contenant pas ledit matériau.

5. Article de protection polymérique selon l'une quelconque des revendications 1 à 4, caractérisé en ce que ledit article est un gant.

6. Procédé de préparation d'un article de protection selon l'une quelconque des revendications 1 à 5, caractérisé en ce qu'il comprend :
(1) l'incorporation du matériau ayant des propriétés conductrices et/ou magnétiques, détectable par un détecteur de particules métalliques, dans un matériau polymérique,
(2) la dissolution du mélange obtenu en (1) dans un solvant approprié et
(3) la mise en forme de l'article.

7. Procédé selon la revendication 6, caractérisé en ce que dans le cas où ledit matériau ayant des propriétés conductrices et/ou magnétiques est sous la forme d'une poudre :
- l'étape (1) comprend soit l'incorporation directe de ladite poudre au polymère, lorsque ce dernier est sous forme solide, soit lorsque ledit polymère est sous forme liquide, la prédispersion de la poudre dans une solution aqueuse, contenant de préférence un agent dispersant, suivie de l'addition du polymère sous forme liquide à ladite prédispersion.

8. Procédé selon la revendication 6 ou la revendication 7, caractérisé en ce que l'étape (3) de mise en forme de l'article est réalisée par trempés successifs dans des solutions telles qu'obtenues à l'étape (2) et dans des solutions ne contenant pas de matériau ayant des propriétés conductrices et/ou magnétiques.
